# EUROPÄISCHE PATENTSCHRIFT

(11) **EP 1 328 893 B1**
(45) Veröffentlichungstag und Bekanntmachung des Hinweises auf die Patenterteilung: **28.06.2006**
(21) Anmeldenummer: 01988910.4
(22) Anmeldetag: 11.10.2001
(51) Int. Cl.: G06K 1/12, G06K 19/06, G01N 1/00, G01R 1/00, C09K 3/00, G07F 7/10, B41M 3/14, G06K 17/00

(54) **VERFAHREN ZUM SCHREIBEN VON DATEN AUF/IN DATENTRÄGER MITTELS LASERSTRAHLUNG**
METHOD OF DATA RECORDING ON/IN DATA SUPPORTS BY MEANS OF LASER RADIATION
PROCEDE POUR INSCRIRE DES DONNEES SUR/DANS UN SUPPORT DE DONNEES AU MOYEN D'UN RAYON LASER

(30) Priorität: 26.10.2000 DE 10053264
(43) Veröffentlichungstag der Anmeldung: 23.07.2003
(73) Patentinhaber: ORGA Systems GmbH, 33104 Paderborn (DE)
(72) Erfinder: FANNASCH, Lothar, 33647 Bielefeld (DE); HENNEMEYER-SCHWENKNER, Michael, 33165 Herbram (DE); SCHUMACHER, Matthias, 33178 Borchen (DE); FISCHER, Dirk, 33106 Paderborn (DE)
(74) Vertreter: Riebling, Peter
(86) Internationale Anmeldenummer: PCT/EP2001/011749
(87) Internationale Veröffentlichungsnummer: WO 2002/035444

(56) Entgegenhaltungen:
- DE-A- 3 501 765
- DE-A- 19 907 940
- DE-U- 29 909 561
- GB-A- 1 565 243
- US-A- 3 973 829
- US-A- 6 096 794

## Beschreibung

Die Erfindung betrifft ein Verfahren zum Einschreiben von Daten, insbesondere Personalisierungsdaten, auf und/oder in einen Datenträger mittels Laserstrahlung und betrifft weiterhin mittels dieses Verfahrens hergestellte Datenträger, insbesondere Kunststoffkarten.

Stand der Technik ist die Einbringung von Markierungen wie z.B. Bildern in die Oberfläche von Kunststoffkarten in der Form von Graustufenbildern, basierend auf einem Karbonisierungsprozeß, der durch LASER-Strahlen einer bestimmten Wellenlänge (in der Regel 1064 nm) ausgelöst wird.

Nach dem Stand der Technik ist es also möglich, schwarze Markierungen mit Laserbeschriftungssystemen zu erzeugen. Dies findet Anwendung in der Laser-Personalisierung, die als wirtschaftliches Verfahren mit hoher Qualität in vielen Bereichen eingesetzt wird und häufig auch ein Sicherheitsmerkmal darstellt.

US 6 096 794 A beschreibt Farbstoffe und Farbstoffmischungen, die durch Einwirkung von elektromagnetischer Strahlung aushärten und ihre Farbe ändern.

DE 35 01 765 A1 offenbart ein Verfahren zur Versiegelung von Informationen auf Datenträgern, bei dem in Verbindung mit einer Beschriftung auf dem Datenträger eine Substanz verwendet wird, die bei Einwirkung von elektromagnetischer Strahlung aushärtet und die Beschriftung versiegelt.

DE 199 07 940 A1, gegen das die Ansprüche abgegrenzt wurden, betrifft ein Verfahren zur Herstellung von mehrschichtigen Sicherheitsprodukten in Form eines Datenträgers, bei dem Sicherheitsmerkmale in Form einer Laserbehandlung auf und/oder in die Schichten des Sicherheitsprodukts eingebracht werden. Es werden hier die weiter oben beschrieben schwarzen Markierungen erzeugt.

DE 299 09 561 U1 offenbart ein Sicherheitspapier mit elektrisch anregbaren Pigmenten, die bei Einwirkung eines elektromagnetischen Wechselfeldes Lumineszenzeffekte zeigen.

Weiter ist aus US 3 973 829 A ein elektro-optisches Bauteil bekannt, das eine Substanz enthält, die bei Einwirkung eines elektrischen Feldes seine lichtabsorbierenden Eigenschaften ändert. Ein solches Bauteil kann als Anzeigeelement verwendet werden.

GB 1 565 243 wählt für einen Datenträger ein thermochromatisches Material, dessen Farbe davon abhängt, welcher Temperatur es ausgesetzt wurde. Dadurch lassen sich bei der Personalisierung einer Karte Informationen in maschinen- und für den Menschen lesbarer Form aufzeichnen.

Ausgehend vom oben genannten Stand der Technik soll ein Verfahren entwickelt werden, mit dem ein Einschreiben von Daten in/auf einen beliebigen Datenträger mittels elektromagnetischer Strahlung, insbesondere mittels Laser einfach, kostengünstig und zuverlässig erfolgt, und somit eine erhöhte Fälschungssicherheit erzielt wird. Außerdem soll ein entsprechender Datenträger vorgeschlagen werden.

Zur Lösung dieser gestellten Aufgabe dient die technische Lehre der unabhängigen Ansprüche.

Wesentliches Merkmal hierbei ist, daß ein beliebiger Datenträger bereit gestellt wird, auf und/oder in welchem mindestens ein Farbmittel mindestens lokal vorgesehen wird, und dieses Farbmittel mittels einer elektromagnetischen Strahlungsquelle von mindestens einem Wellenlängenbereich bestrahlt wird, so daß sich im Bereich der Bestrahlung eine Änderung der Farbe des Farbmittels durch Bleichen ergibt, wobei diese Farbänderung maschinell und/oder durch ein menschliches Auge feststellbar ist.

Insbesondere wird dieses Verfahren zur Herstellung von personalisierten Kunststoffkarten als Datenträger eingesetzt, welche Kunststoffkarten eine Farbmittelformulierung enthalten, welche Farbmittelformulierung eine farbige Lasermarkierung der Karte durch wellenlängenselektives Ausbleichen ermöglicht.

Vorteil hierbei ist, daß nun erstmals ein Einschreiben von Daten in/auf einen Datenträger in Form einer farbige Laserbeschriftung bzw. Dekoration möglich ist, wobei die zu erzielende Markierung (Daten) ohne eine Zerstörung des Materials des Datenträgers, insbesondere dessen Oberfläche erfolgt und somit gegenüber einer späteren Manipulation sicher ist. Diese farbige Markierung kann wie bereits erwähnt insbesondere zur Personalisierung von Kunststoffkarten genutzt werden.

Die Erfindung nutzt also ein Lasersystem, das bei mindestens einer, bevorzugt aber bei mehreren Wellenlängen im sichtbaren oder unsichtbaren Spektrum arbeitet, für die Ausbildung farbiger Markierungen durch selektives Bleichen einer Farbmittelformulierung.

Zu den verschiedenen Wechselwirkungen zwischen Laserlicht und Materie gehört das Bleichen von farbaktiven Substanzen. Hierbei besteht erfindungsgemäße die Möglichkeit mit Hilfe eines Laserstrahls diese farbaktiven Substanzen zu zerstören, so daß die Körperfarbe eines zum Beispiel Pigmente enthaltenden Substrates von farbig nach weiß wechselt.

Dieser Vorgang wird im Rahmen der vorliegenden Erfindung angewendet.

Grundvoraussetzung für diesen Prozess ist, daß die farbaktive Substanz das Laserlicht absorbiert und eine chemische Reaktion eingeht, bei der sie ihre Farbeigenschaften verändert. Im einfachsten Fall erfolgt ein chemischer Abbau der farbaktiven Substanz. Zudem sollte das Laserlicht keine Nebenreaktionen anregen, die zu einer Verfärbung des Substrats führen, und damit kein Bleichen nach weiß bewirken.

Die verwendete Farbmittelformulierung zeigt aufgrund des selektiven Bleichens einen Farbumschlag, wobei dieser Farbumschlag je nach Art und Zahl der unterschiedlichen Farbmittel einer Aufhellung und oder einer Änderung des Farbtons und der Farbsättigung entspricht.

Diese Farbmittelformulierung besteht unter anderem aus einem, oder mehreren verschiedenartigen Pigment(en) oder einer Pigmentmischung verschiedenartiger Pigmente, einem oder mehreren verschiedenartigen Farbstoff(en) oder einer Farbstoffmischung.

Nach der Definition für Farbmittel (DIN 55943-11-1993: Farbmittel, Begriffe) sind Pigmente unlösliche Farbmittel im Gegensatz zu löslichen Farbmitteln, die allgemein als Farbstoffe bezeichnet werden.
Wenn mehrere Farbmittel vorgesehen sind, dann sind diese in ihrer Zusammensetzung so gewählt, daß einzelne Farbmittel durch Laserlicht wellenlängenselektiv geblichen werden können. Die Selektivität ist hierbei dadurch gegeben, daß bei einer gewählten Laserwellenlänge hauptsächlich nur eine Spezies an Farbmittel Laserlicht absorbiert und dadurch geblichen wird. Vorzugsweise stimmt der Bereich der Laserwellenlängen mit dem Bereich um das Absorptionsmaximum des Farbmittels herum etwa überein. Bevorzugt wird also, wenn die verwendete Farbmittelformulierung in dem Absorptionsverhalten der einzelnen Farbmittel auf die Wellenlängen des verwendeten Laserlichts abgestimmt ist, **so daß** die Wellenlänge des verwendeten Laserlichts dem Absorptionsmaximum entspricht.

Im Falle der Verwendung eines einzelnen Farbmittels kann durch das Bleichen eine helle bzw. weiße Markierung erhalten werden.

Werden Farbmischungen eingesetzt, wird durch das selektive Bleichen eines oder auch mehrerer Farbmittel eine Verschiebung des Farbtons der Farbmittelmischung nach den Gesetzmäßigkeiten der "Subtraktiven Farbmischung" erzielt, die vorzugsweise von nicht bunt (Graustufen oder schwarz) zu farbig und schließlich - im Falle des Bleichens aller auf/in dem Datenträger vorgesehenen Farbmittel - wieder zu nicht bunt (weiß) reicht. Dabei kann der Bleichungsgrad einzelner Farbmittel durch die Intensität des Laserlichts moduliert werden. Die Anzahl der erreichbaren Farben wird dabei bestimmt durch die Zusammenstellung der Farbmittelauswahl und der daraus folgenden Anpassung der Absorptionsspektren.

Die Anzahl der Farbmittel, die die Formulierung umfaßt, ist für das Prinzip des selektiven Bleichens unerheblich. Mit zunehmender Anzahl an Farbmitteln können mehr Einzelfarben erreicht werden. Hierdurch sind aber auch komplexere Lasersysteme und Spezialfarbmittel erforderlich, was zu erhöhten Herstellungskosten des mit Daten versehenen Datenträgers führt.

Als Farbmittel sind die verschiedenen Stoffklassen möglich, die auch in der Lack-, Druckfarbenindustrie oder Kunststoffeinfärbung Verwendung finden. So zum Beispiel Azzo-, Chinacridon-, Phtalocyanin-, Triarylcarbonium- oder Metallkomplexfarbstoffe und andere.

Im folgenden wird der an sich beliebige Datenträger nur noch als mehrschichtige Kunststoffkarte in Scheckkartenformat beschrieben, dies soll aber die Erfindung dahingehend nicht einschränken, da prinzipiell beliebige Formen und Materialien des erfindungsgemäßen Datenträgers vorgesehen sein können.

Ebenso werden alle möglichen Einbindungen und Einbauorte der Farbmittel in einem Datenträger beansprucht. Die Farbmittel können daher als Druckfarbe auf eine bestimmte oder auch mehrere Lagen des Datenträgers aufgedruckt oder in anderen Weise aufgebracht sein. Die Farbmittel können aber auch in das Kunststoff-Polymer einer oder mehreren Schichten des Datenträgers eingebunden sein. Die Farbmittel können auch in den Kleber, den Lack oder als Additiv in das Kunststoffmaterial eingebunden sein.

Zur Implementierung der Farbmittelformulierung in die Karte sind unterschiedliche Wege möglich.
1. Die Farbmittelformulierung wird in die Polymere Matrix des Kartenmaterials eingearbeitet. Die so erhaltenden eingefärbten Polymere werden dann
   a) entweder zu Folien verarbeitet, welche zum Beispiel als Deckfolien oder als Kemfolien in den Schichtaufbau laminierter Karten integriert werden.
   b) Oder die Farbmittelformulierung enthaltenden Polymere werden im Spritzgußverfahren verarbeitet. Dabei kann der gesamte Kartenkörper oder mit Hilfe der Mehrkomponenten-Spritzgußtechnik ein Teil des Kartenkörpers aus dem die Farbmittelformulierung enthaltenden Polymeren spritzgegossen werden.
2. Die Farbmittelformulierung wird in ein Beschichtungssystem eingearbeitet. Dieses Beschichtungssystem kann sowohl ein Lack oder auch ein die Farbmittelformulierung enthaltender Haftvermittler oder ein Klebstoffsystem sein. Mit diesem Beschichtungssystem können die Kartenflächen beschichtet werden, indem
   a) im Falle laminierter Karten eine Beschichtung bestimmter Folien über bekannte Verfahren wie Sieb-, Flexo-, Offsett-, Tampondruck oder Walzenauftrag und/oder Beschichtung durch ein Sprühverfahren erfolgt und diese Beschichtung durch die Integration der beschichteten Folien den Schichtaufbau der Karte platziert wird oder
   b) analog a) eine Beschichtung spritzgegossener Karten erfolgt.
3. Weiterhin kann die Farbmittelfomnulierung voll- aber auch teilflächig implementiert werden über die Verwendung von:
   a) Prägefolie, also beschichteter Folie, welche ihre Beschichtung über einen Prägeprozeß auf die Karte oder auf einzelne Folien der zu laminierenden Karten überträgt,
   b) "Label", also einem vorgefertigten flächigen Etikett, welches in den zu laminierenden Folienverbund eingelegt und einlaminiert wird,
   c)"In-Mold-Film-Decoration", welche die Beschichtung der Oberfläche im Spritzgußwerkzeug ermöglicht.

Generell besteht die Möglichkeit, die Oberfläche der Karte zu beschichten oder die, die Farbmittelformulierung enthaltende, Schicht durch eine Schutzschicht (Schutzlack oder "Overlay-Folie") abzudecken.

Die Farbmittelformulierung wird also bevorzugt in die polymere Matrix des Kartenmaterials eingearbeitet und die so erhaltenden eingefärbten Polymere entweder zu Folien verarbeitet, welche als Deckfolien oder als Kemfolien in den Schichtaufbau laminierter Karten integriert werden, oder die so erhaltenden eingefärbten Polymere im Spritzgußverfahren zu Karten verarbeitet. Dabei kann der gesamte Kartenkörper oder mit Hilfe der Mehrkomponenten-Spritzgußtechnik ein Teil des Kartenkörpers aus dem die Farbmittelformulierung enthaltenden Polymeren spritzgegossen werden.

Die Farbmittelformulierung kann auch in Form einer Beschichtung auf die Oberfläche der Karte oder im Falle laminierter Karten auf eine der zu laminierenden Folien aufgetragen werden. Dieses Beschichtungssystem ist entweder ein Lack oder ein die Farbmittelformulierung enthaltender Haftvermittler. Mit diesem Beschichtungssystem können die Karten oder die Folien ganzflächig oder auch teilflächig beschichtet werden über bekannte Verfahren wie Sieb-, Flexo-, Offsett-, Tief-, Tampondruck und Walzenauftrag.

Bevorzugt ist, wenn die Farbmittelformulierung voll- aber auch teilflächig implementiert wird, insbesondere über die Verwendung von:
a) Prägefolie, also beschichteter Folie, welche ihre Beschichtung über einen Prägeprozeß auf die Karte oder auf einzelne Folien der zu laminierenden Karten überträgt,
b) "Label", also einem vorgefertigten flächigen Etikett, welches in den zu laminierenden Folienverbund eingelegt wird und einlaminiert wird,
c) "In-Mold-Decoration", welche die Beschichtung der Oberfläche im Spritzgußwerkzeug ermöglicht.

Die Erfindung ist die Voraussetzung für eine teilflächige oder auch ganzflächige farbige Markierung einer Kunststoffkarte mit dem Laser. Sie ermöglicht somit eine farbige Laser-Personalisierung von Karten.

Im folgenden wird die Erfindung anhand von mehreren Zeichnungen, die die Ausführungswege darstellen, näher erläutert. Hierbei gehen aus den Zeichnungen und ihrer Beschreibung weitere Merkmale und Vorteile der Erfindung hervor.
- Figur 1:: zeigt den erfindungsgemäßen Datenträger in einer ersten Ausführungsform mit Kemfolie als Trägermaterial;
- Figur 2:: zeigt den erfindungsgemäßen Datenträger in einer zweiten Ausführungsform mit Spritzgußkörper als Trägermaterial;
- Figur 3:: zeigt für ein System mit zwei Grundfarben in/auf dem erfindungsgemäßen Datenträger das Wellenlängenspektrum der Farbmittel und der zugehörigen Laserstrahlungen.

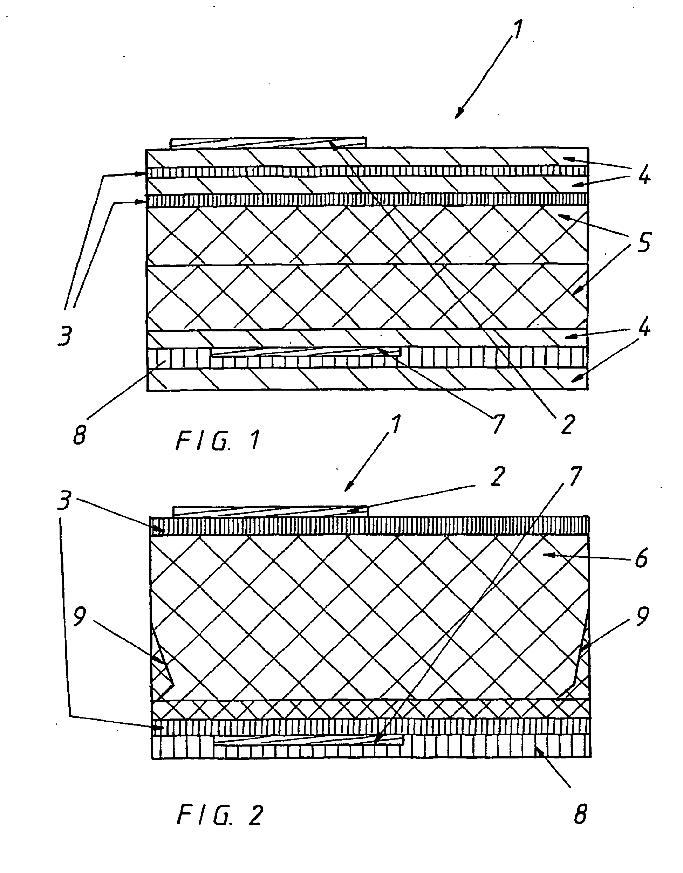

Figur 1 zeigt den erfindungsgemäßen Datenträger 1 in einer ersten Ausführungsform mit zwei übereinander laminierten Kemfolien 5 als Trägermaterial.

Auf der oberen Kemfolie 5 ist eine erste Druckschicht 3 aufgebracht, auf welcher wiederum eine erste transparente Deckfolie 4 mit Farbmittel liegt. Diese erste transparente Deckfolie 4 mit Farbmittel ist mit einer zweiten Druckschicht 3 beschichtet, welche mit einer zweiten transparenten Deckfolie 4 mit Farbmittel bedeckt ist, auf welcher wiederum eine Prägefolie 2 aufgebracht ist. Die Prägefolie 2 ist auf ihrer der zweiten Deckfolie 4 zugewandten Seite mit Farbmittel versehen, welche Farbmittel dann durch den Prägeprozeß der Prägefolie 2 auf die Oberfläche der zweiten Deckfolie aufgeprägt werden.

Auf der unteren Kemfolie 5 ist ebenfalls eine Deckfolie 4 mit Farbmittel aufgebracht, auf welcher ein Etikett 7 lokal aufgelegt ist, welches Etikett 7 mittels einer vollflächigen Beschichtung 8 gesichert ist. Hierbei schließt die Beschichtung 8 das Etikett vollkommen ein. Auch in der Beschichtung 8 selbst können Farbmittel vorhanden sein. Auf der Beschichtung 8 ist in Figur 1 eine weitere Deckfolie 4 mit Farbmittel aufgebracht.

Mit der Ausführungsform gemäß der Figur 1 kann z.B. eine Personalisierung eines Ausweises in mehreren Schichten quasi dreidimensional erfolgen, was zu einer erhöhten Manipulations- und Fälschungssicherheit führt.

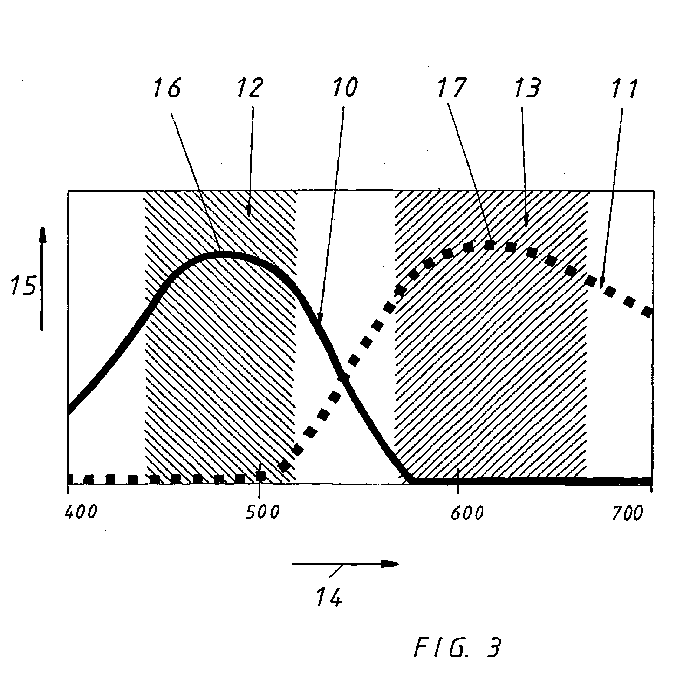

Figur 2 zeigt den erfindungsgemäßen Datenträger 1 in einer zweiten Ausführungsform mit Spritzgußkörper 6 als Trägermaterial. Der Spritzgußkörper 6 selbst kann ausschließlich oder zusätzlich zu anderen Teilen des Datenträgers 1 Farbmittel enthalten.

In diesem Beispiel besteht der tragende Spritzgußkörper 6 aus zwei Teilen, nämlich einem ersten oberen und einem zweiten unteren Spritzgußkörper 6, welche über ihre jeweiligen Oberflächen miteinander verbunden sind. Diese Verbindung kann mittels Klebeschicht, Laminierung oder im Spritzgußverfahren selbst erzeugt werden. Um einen günstigeren Zusammenhalt der beiden übereinanderliegenden Spritzgußkörper 6 zu erhalten, sind diese über Anschrägungen 9 mindestens teilweise auch in ihrer Querrichtung miteinander verbunden. Die Anschrägung 9 verläuft also schräg zur Längsachse des Datenträgers 1, so daß die beiden Spritzgußkörper 6 im Randbereich in Dickenrichtung harmonisch ineinander übergehen. Im Randbereich des Datenträgers sind bevorzugt die beiden Spritzgußkörper 6 etwa gleich dick, was zu einem günstigen Zusammenhalt führt.

Auf dem oberen Spritzgußkörper 6 ist eine obere Druckschicht 3 aufgetragen, auf welcher sich lokal eine Prägefolie 2 befindet. Diese Prägefolie 2 besitzt die Eigenschaften wie bereits in Figur 1 beschrieben.

Auf die Oberfläche des unteren Spritzgußkörpers 6 ist eine untere Druckschicht 3 aufgetragen, auf welcher ein Etikett 7 lokal aufgelegt ist, welches mittels einer vollflächigen Beschichtung 8 dort gesichert ist.

In den Figuren 1 und 2 können also Farbmittel in Form von löslichen Farbstoffen und/oder unlöslichen Farbpigmenten in sämtlichen Teilen des Datenträgers 1 vorgesehen sein, insbesondere jedoch in den Folien 2, 4, 5,6 und dem Spritzgußkörper 6.

Die Ausführungsformen der Figuren 1 und 2 sind selbstverständlich nur beispielhaft und sollen die Erfindung nicht darauf beschränken. In anderen Ausführungsformen sind andere Schichtaufbauten des Datenträgers 1 vorgesehen. Wichtig hierbei ist nur das Vorhandensein von insbesondere mittels Laserstrahlung bleichbaren Farbmitteln in mindestens einem lokalen Bereich des Datenträgers zum fälschungssicheren Einschreiben von (Personalisierungs-) Daten.

Figur 3 gibt ein Beispiel für ein System mit zwei Grundfarben aus Pigmenten wieder. Neben den möglichen Absorptionskurven 10, 11 der Farbmittel sind hier die vorzüglichen Bereiche 12, 13 für die Wellenlänge der Laser angegeben. Es ist also die Absorption 15 zweier verschiedenartiger Farbmittel über dem Verlauf der Wellenlänge 14 in nm angegeben.

Es ist hierbei gut erkennbar, daß das Maximum 16 der Absorption 15 für das erste Pigment (Spektrum 10) in den ersten Wellenlängenbereich 12 des Lasers fällt und das Maximum 17 der Absorption 15 für das zweite Pigment (Spektrum 11) in den zweiten Wellenlängenbereich 13 des Lasers.

### Zeichnungslegende

- 1: Datenträger
- 2: Prägefolie
- **3**: **Druckschicht.**
- 4: Deckfolie
- 5: Kemfolie
- 6: Spritzgußkörper
- 7: Etikett
- 8: Beschichtung
- 9: Anschrägung
- 10: erstes Absorptionsspektrum
- 11: zweites Absorptionsspektrum
- 12: erster Wellenlängenbereich
- 13: zweiter Wellenlängenbereich
- 14: Wellenlänge/nm
- 15: Absorption
- 16: Maximum von 10
- 17: Maximum von 11

## Patentansprüche

1. Verfahren zum Einschreiben von Daten auf und/oder in einen Datenträger (1) mittels elektromagnetischer Strahlung, mit den Schritten:
Auf- oder Einbringen eines Farbmittels auf oder in den Datenträger (1), wobei ein mindestens eine farbaktive Substanz enthaltendes Farbmittel verwendet wird,
Einschreiben von Daten durch Bestrahlen des auf dem Datenträger (1) vorhandenen Farbmittels mit elektromagnetischer Strahlung mindestens eines Wellenlängenbereichs (12; 13),
**dadurch gekennzeichnet, daß eine farbaktive Substanz**
verwendet wird, **die** Strahlung eines bestimmten Wellenlängenbereichs absorbiert und eine chemische Reaktion eingeht, bei der sie ihre Farbeigenschaften verändert, indem ein chemischer Abbau und ein Ausbleichen der farbaktiven Substanz erfolgt,
**so daß** auf / in dem Datenträger (1) in den bestrahlten Bereichen eine den Daten entsprechende helle oder weiße Markierung erzeugt wird.

2. Verfahren nach Anspruch 1,
**dadurch gekennzeichnet, daß** die elektromagnetische Strahlung mittels eines Lasers eingebracht wird.

3. Verfahren nach einem der Ansprüche 1 oder 2,
**dadurch gekennzeichnet, daß** die elektromagnetische Strahlungsquelle mindestens in der Intensität und/oder in der abgestrahlten Wellenlänge der Strahlung modulierbar ist.

4. Verfahren nach einem der Ansprüche 1 bis 3,
**dadurch gekennzeichnet, daß** als Farbmittel ein in der Trägersubstanz des Datenträgers (1) löslicher Farbstoff und/oder nichtlösliche Farbpigmente eingesetzt werden.

5. Verfahren nach einem der Ansprüche 1 bis 4,
**dadurch gekennzeichnet, daß** eine Farbmittelformulierung verwendet wird, die mehrere unterschiedliche farbaktive Substanzen enthält.

6. Verfahren nach einem der Ansprüche 1 bis 5,
**dadurch gekennzeichnet, daß** die verwendete Farbmittelformulierung und das Absorptionsverhalten der einzelnen farbaktiven Substanzen auf die Wellenlängen der verwendeten elektromagnetischen Strahlung abgestimmt sind.

7. Verfahren nach einem der Ansprüche 1 bis 6,
**dadurch gekennzeichnet, daß** der Bereich der Wellenlänge (12; 13) der verwendeten elektromagnetischen Strahlung etwa im Bereich des Absorptionsmaximums (16 ;17) mindestens einer farbaktiven Substanz liegt.

8. Verfahren nach einem der Ansprüche 1 bis 7,
**dadurch gekennzeichnet, daß** die Farbänderung, je nach Art und Zahl der unterschiedlichen farbaktiven Substanzen, einer Aufhellung und/oder einer Änderung des Farbtons und/oder der Farbsättigung entspricht.

9. Datenträger (1) aus Kunststoff, wobei auf oder in den Datenträger (1) ein mindestens eine farbaktive Substanz enthaltendes Farbmittel auf- oder eingebracht ist, das ganz oder teilweise in die polymere Matrix des Kunststoffmaterials des Datenträgers (1) eingearbeitet ist,
**dadurch gekennzeichnet, daß die farbaktive Substanz derart** ausgebildet ist, daß sie Strahlung eines bestimmten Wellenlängenbereichs absorbiert und eine chemische Reaktion eingeht, bei der sie ihre Farbeigenschaften verändert, indem ein chemischer Abbau und ein Ausbleichen der farbaktiven Substanz erfolgt.

10. Datenträger nach Anspruch 9, **dadurch gekennzeichnet, daß** er mehrschichtig als Laminat aufgebaut ist und mindestens eine Folie (4; 5) enthält, welche als Deckfolie (4) oder als Kernfolie (5) in den Schichtaufbau des laminierten Datenträgers (1) integriert ist.

11. Datenträger nach Anspruch 9, **dadurch gekennzeichnet, daß** er mindestens einen Spritzgußkörper (6) enthält.

12. Datenträger (1) nach einem der Ansprüche 9 bis 11,
**dadurch gekennzeichnet, daß** er etwa die Ausmaße von herkömmlichen Kreditkarten oder Ausweiskarten oder Reisepässen besitzt.

13. Datenträger (1) nach Anspruche 10,
**dadurch gekennzeichnet, daß** das Farbmittel in/an den Folien (4; 5) des Datenträgers (1) vorgesehen ist.

14. Datenträger (1) nach einem der Ansprüche 9 bis 13,
**dadurch gekennzeichnet, daß** das Farbmittel in Form einer Beschichtung (8) auf die Oberfläche des Datenträgers (1) aufgetragen ist.

15. Datenträger (1) nach Anspruch 14,
**dadurch gekennzeichnet, daß** die Beschichtung (8) mindestens einen Lack und/oder Haftvermittler und/oder Klebstoffsystem enthält.

16. Datenträger (1) nach einem der Ansprüche 14 oder 15,
**dadurch gekennzeichnet, daß** die Beschichtung (8) ganzflächig oder teilflächig vorgesehen ist.

17. Datenträger (1) nach einem der Ansprüche 9 bis 13,
**dadurch gekennzeichnet, daß** das Farbmittel auf einer Prägefolie (2) vorgesehen ist und über einen Prägeprozeß auf die Oberfläche des Datenträgers (1) aufgebracht ist.

18. Datenträger (1) nach einem der Ansprüche 9 bis 13,
**dadurch gekennzeichnet, daß** das Farbmittel in einem Etikett (7) vorliegt.

19. Datenträger (1) nach Anspruch 18, **dadurch gekennzeichnet, daß** das Etikett (7) innerhalb der Schichten (4-6, 8) eingebracht ist.

## Claims

1. Method for the recording of data on and/or in a data carrier (1) by means of electromagnetic radiation, comprising the steps:
applying or introducing a colouring agent on or in the data carrier (1), wherein a colouring agent containing at least one colour-active substance is used, inputting data by irradiating the colouring agent present on the data carrier (1) with electromagnetic radiation of at least one wavelength range (12; 13), **characterised in that** a colour-active substance is used, which absorbs radiation of a specific wavelength range and undergoes a chemical reaction, in which it changes its colour properties, **in that** a chemical decomposition and a bleaching of the colour-active substance take place, so a bright or white marking corresponding to the data is generated on/in the data carrier (1) in the irradiated regions.

2. Method according to claim 1, **characterised in that** the electromagnetic radiation is introduced by means of a laser.

3. Method according to either of claims 1 or 2, **characterised in that** the electromagnetic radiation source can be modulated at least with regard to the intensity and/or the emitted wavelength of the radiation.

4. Method according to any one of claims 1 to 3, **characterised in that** a dye which is soluble in the carrier substance of the data carrier (1) and/or non-soluble colour pigments are used as the colouring agent.

5. Method according to any one of claims 1 to 4, **characterised in that** a colouring agent formulation is used, which contains a plurality of different colour-active substances.

6. Method according to any one of claims 1 to 5, **characterised in that** the colouring agent formulation used and the absorption behaviour of the individual colour-active substances are matched to the wavelengths of the electromagnetic radiation used.

7. Method according to any one of claims 1 to 6, **characterised in that** the range of the wavelength (12; 13) of the electromagnetic radiation used is approximately in the range of the absorption maximum (16; 17) of at least one colour-active substance.

8. Method according to any one of claims 1 to 7, **characterised in that** the colour change, depending on the type and number of different colour-active substances corresponds to a brightening and/or a change in the colour tone and/or the colour saturation.

9. Data carrier (1) made of plastics material, wherein a colouring agent containing at least one colour-active substance is applied on or introduced into the data carrier (1) and is incorporated completely or partially into the polymer matrix of the plastics material of the data carrier (1), **characterised in that** the colour-active substance is configured such that it absorbs radiation of a specific wavelength range and undergoes a chemical reaction, in which it changes its colour properties, **in that** a chemical decomposition and a bleaching of the colour-active substance take place.

10. Data carrier according to claim 9, **characterised in that** it is constructed in a multi-layered manner as a laminate, and contains at least one film (4; 5), which is integrated as a cover film (4) or as a core film (5) into the layer construction of the laminated data carrier (1).

11. Data carrier according to claim 9, **characterised in that** it contains at least one injection-moulded body (6).

12. Data carrier (1) according to any one of claims 9 to 11, **characterised in that** it has approximately the dimensions of conventional credit cards or identity cards or passports.

13. Data carrier (1) according to claim 10, **characterised in that** the colouring agent is provided in/on the films (4; 5) of the data carrier (1).

14. Data carrier (1) according to any one of claims 9 to 13, **characterised in that** the colouring agent is applied in the form of a coating (8) on the surface of the data carrier (1).

15. Data carrier (1) according to claim 14, **characterised in that** the coating (8) contains at least one varnish and/or adhesion promoter and/or adhesive system.

16. Data carrier (1) according to either of claims 14 or 15, **characterised in that** the coating (8) is provided over the whole area or part of the area.

17. Data carrier (1) according to any one of claims 9 to 13, **characterised in that** the colouring agent is provided on an embossing film (2) and is applied via an embossing process on the surface of the data carrier (1).

18. Data carrier (1) according to any one of claims 9 to 13, **characterised in that** the colouring agent is present in a label (7).

19. Data carrier (1) according to claim 18, **characterised in that** the label (7) is introduced inside the layers (4 to 6, 8).

## Revendications

1. Procédé pour inscrire des données sur et/ou dans un support de données (1) au moyen d'un rayonnement électromagnétique, comprenant les étapes consistant à :
appliquer ou incorporer un colorant sur ou dans le support de données (1), étant précisé qu'on utilise un colorant contenant au moins une substance colorante active,
inscrire des données par exposition du colorant présent sur le support de données (1) à un rayonnement électromagnétique dans au moins une gamme de longueurs d'onde (12 ; 13),
**caractérisé en ce qu'**une substance colorante active est utilisée, qui absorbe le rayonnement d'une gamme de longueurs d'onde déterminée, et amorce une réaction chimique, par laquelle elle modifie ses propriétés de couleur, grâce à une décomposition chimique et à une décoloration de la substance colorante active,
de sorte qu'un marquage clair ou blanc correspondant aux données est produit sur/dans le support de données (1) dans les zones exposées au rayonnement.

2. Procédé selon la revendication 1,
**caractérisé en ce que** le rayonnement électromagnétique est mis en oeuvre à l'aide d'un laser.

3. Procédé selon la revendication 1 ou 2,
**caractérisé en ce que** la source de rayonnement électromagnétique est modulable au moins quant à l'intensité et/ou la longueur d'onde émise du rayonnement.

4. Procédé selon l'une quelconque des revendications 1 à 3,
**caractérisé en ce qu'**un colorant soluble dans la substance porteuse du support de données (1) et/ou des pigments colorés insolubles sont mis en oeuvre comme colorant.

5. Procédé selon l'une quelconque des revendications 1 à 4,
**caractérisé en ce qu'**on utilise une composition de colorant contenant plusieurs substances colorantes actives différentes.

6. Procédé selon l'une quelconque des revendications 1 à 5,
**caractérisé en ce que** la composition de colorant utilisée et le comportement d'absorption des substances colorantes actives individuelles sont adaptés aux longueurs d'onde du rayonnement électromagnétique utilisé.

7. Procédé selon l'une quelconque des revendications 1 à 6,
**caractérisé en ce que** la gamme de longueurs d'onde (12 ; 13) du rayonnement électromagnétique utilisé se situe approximativement dans la gamme du maximum d'absorption (16 ; 17) d'au moins une substance colorante active.

8. Procédé selon l'une quelconque des revendications 1 à 7,
**caractérisé en ce que** le changement de couleur, en fonction du type et du nombre des différentes substances colorantes actives, correspond à un éclaircissement et/ou un changement de teinte et/ou de saturation de couleur.

9. Support de données (1) en matière synthétique, sur ou dans lequel est appliqué ou incorporé un colorant contenant au moins une substance colorante active, que l'on fait pénétrer pour tout ou partie dans la matrice polymère du matériau synthétique du support de données (1),
**caractérisé en ce que** la substance colorante active est constituée de telle sorte qu'elle absorbe le rayonnement d'une gamme de longueurs d'onde donnée, et amorce une réaction chimique par laquelle elle modifie ses propriétés de couleur grâce à une décomposition chimique et une décoloration de la substance colorante active.

10. Support de données selon la revendication 9, **caractérisé en ce qu'**il est réalisé en plusieurs couches sous la forme d'un stratifié, et comprend au minimum une feuille (4 ; 5), intégrée en tant que feuille de recouvrement (4) ou en tant que feuille de coeur (5) dans la composition en couches du support de données stratifié (1).

11. Support de données selon la revendication 9, **caractérisé en ce qu'**il comprend au moins un corps moulé par injection (6).

12. Support de données (1) selon l'une quelconque des revendications 9 à 11,
**caractérisé en ce qu'**il a approximativement les dimensions de cartes de crédit, de cartes d'identité ou de passeports classiques.

13. Support de données (1) selon la revendication 10,
**caractérisé en ce que** le colorant est disposé dans/sur les feuilles (4 ; 5) du support de données (1).

14. Support de données (1) selon l'une quelconque des revendications 9 à 13,
**caractérisé en ce que** le colorant est appliqué sous la forme d'une couche de revêtement (8) sur la surface du support de données (1).

15. Support de données (1) selon la revendication 14,
**caractérisé en ce que** la couche de revêtement (8) comprend au moins une laque et/ou un agent adhésif et/ou un système adhésif.

16. Support de données (1) selon la revendication 14 ou 15,
**caractérisé en ce que** la couche de revêtement (8) est disposée sur toute la surface, ou sur une partie de la surface.

17. Support de données (1) selon l'une quelconque des revendications 9 à 13,
**caractérisé en ce que** le colorant est disposé sur une feuille à marquer (2), et est appliqué sur la surface du support de données (1) par un procédé de marquage.

18. Support de données (1) selon l'une quelconque des revendications 9 à 13,
**caractérisé en ce que** le colorant se trouve dans une étiquette (7).

19. Support de données (1) selon la revendication 18, **caractérisé en ce que** l'étiquette (7) est introduite à l'intérieur des couches (4 à 6, 8).
